Europäisches Patentamt

European Patent Office

Office européen des brevets

(11) Publication number: **0 408 755 A1**

# (12) EUROPEAN PATENT APPLICATION
## published in accordance with Art. 158(3) EPC

㉑ Application number: 89912286.5

㉒ Date of filing: 08.09.89

㊀ International application number:
PCT/SU89/00235

㊆ International publication number:
WO 90/04482 (03.05.90 90/10)

㉛ Int. Cl.⁵: **B23K 7/00**

㉚ Priority: **17.10.88 SU 4490442**

㊸ Date of publication of application:
**23.01.91 Bulletin 91/04**

㊳ Designated Contracting States:
**DE FR GB IT**

㉛ Applicant: **VSESOJUZNY NAUCHNO-ISSLEDOVATELSKY I KONSTRUKTORSKY INSTITUT AVTOGENNOGO MASHINOSTROENIA**
**Shelaputinsky per., 1**
**Moscow, 109004(SU)**

㊆ Inventor: **KADOCHKIN, Evgeny Leonidovich**
**ul. Vorontsovskaya, 46-49**
**Moscow, 109004(SU)**
Inventor: **SUKHININ, Gennady Konstantinovich**
**ul. Sakhalinskaya, 6-2-65**
**Moscow, 107589(SU)**
Inventor: **RUKHMAKOV, Alexandr Ivanovich**
**ul. Frunze, 15-10**
**Leningrad, 196135(SU)**
Inventor: **MOISEEV, Jury Ivanovich**
**per. B.Kozlovsky, 10-4**
**Moscow, 107078(SU)**
Inventor: **DECKER, Klaus**
**K.Schumacher 37**
**D-6365 Rosbach(DE)**
Inventor: **WENNEMERS, Johann**
**Eihenveg 33a**
**D-6454 Bruchköbel(DE)**

㊴ Representative: **Knott, Stephen Gilbert et al**
**MATHISEN, MACARA & CO. The Coach House 6-8 Swakeleys Roadoad**
**Ickenham Uxbridge Middlesex UB10 8BZ(GB)**

(54) METHOD AND DEVICE FOR OPTOELECTRONIC CONTROL OF OXYGEN CUTTING.

(57) The method for optoelectronic control of the metal oxygen cutting process comprises the successive operations of detecting the torch flame luminance prior to cutting and evaluating this luminance, detecting the metal surface (13) luminance during its heating at the initial cutting site (15) and evaluating this luminance, detecting the luminance of the metal cut frontal surface and evaluating this luminance, and generating discrete control signals. In accordance with these control signals commands are issued to cut off fuel gas and heating oxygen supply, to enable or disable cutting oxygen supply to the cutting torch (1) and torch displacement.

The device embodying this method for optoelectronic control of the metal oxygen cutting process comprises at least one cutting torch (1, 2) with channels to feed the fuel gas and heating oxygen and a channel for feeding cutting oxygen. Each cutting torch (1, 2) is linked to torch displacement drives (17, 19). The channel (4) for feeding cutting oxygen houses a first optical sensor (9) generating electric signals indicative of torch flame luminosity prior to cutting, a second optical sensor (10) generating electric signals indicative of the metal surface luminosity during its heating at the initial cutting site, and a third optical sensor (11) generating electric signals indicative of the luminosity of the metal cut frontal surface. The first, second and third optical sensors (9, 10, 11) are electrically connected via a first, second and third network of connected in series amplifier (33, 35, 37) and generator (34, 36, 38) and via a control system (41) to fuel gas and heating oxygen supply and cutting oxygen supply systems and to torch displacement drives (17, 18).

FIG. 1

2

# METHOD FOR OPTOELECTRONIC CONTROL OF METAL

## OXYGEN CUTTING AND DEVICE THEREOF

### Field of the Invention

This invention relates to the area of metal cutting, and more specifically - to methods of optoelectronic control of the process of metal oxygen cutting and devices thereof.

This invention can be used in mechanical engineering and shipbuilding.

### Prior Art

Known in the art is a method for controlling metal oxygen cutting (US, A, 3596892), based on using the effect of thermionic emission from metals heated to high temperatures. The difference in potential between the cutting torch and metal being cut depends on the parameters of metal oxygen cutting, and this is used to cease cutting torch movement and cut off the oxygen supply in case of process parameters falling outside preset limits.

Known in the art is a device for controlling metal oxygen cutting (US, A, 3596892), comprising a threshold relay connected between the cutting torch and metal being cut and driving the input of a control system, the outputs whereof are connected to the cutting torch drives and to the oxygen supply system. The threshold relay is enabled at a potential difference between the cutting torch nozzle and the metal sheet being cut, corresponding to a normal oxygen cutting process, and is disabled at a potential difference between the cutting torch nozzle and metal sheet being cut, corresponding to an abnormal oxygen cutting process. Violation of the conditions of metal oxygen cutting causes cessation of the cutting torch movement and oxygen supply.

In use of this known in the art method of controlling metal oxygen cutting the level of the potential difference between the cutting torch and metal sheet being cut varies according to the state of the metal sheet surface and is affected by torch backfire, this disturbing control of the metal oxygen cutting process.

Also known in the art is a method of optoelectronic control of the metal oxygen cutting process (Jp, B,55=6034), residing in detecting by an optical sensor in the form of a photoelectric cell of the light emission from the metal surface, evaluating the luminance level at the frontal surface of the metal cut by means of an optical sensor, generating electric control signals indicative of the luminance level of the metal cut frontal surface. Variations in the luminance level of the metal cut frontal surface, due to violation of the parameters of the metal oxygen cutting process, produce commands controlling the speed of cutting torch displacement. In the absence of light emission from the metal cut frontal surface, a command is generated to cut off the oxygen heating gas and cutting oxygen supply.

Also known in art is a device for optoelectronic control of metal oxygen cutting (Jp; B, 55=6034), comprising a cutting torch with channels in the body periphery to feeding the fuel gas and heating oxygen and a central channel in the body to feed the cutting oxygen. The central channel of the cutting torch houses and optical sensor generating electric signals corresponding to the luminance of the metal cut frontal surface. The torch is provided with electric drives for torch movement. The torch channels are hydraulically connected to feeding systems, which supply the fuel gas, heating oxygen and cutting oxygen. The output of the optical sensor, generating electric signals corresponding to the luminance level at the metal cut frontal surface, is connected to an electric signal amplifier, the output whereof is connected to the input of a wave converter. The wave converter output is connected to the input of a comparator, with the output thereof connected to the input of the the control system. The outputs of the control system are connected to the cutting torch electric drives and to the fuel gas, heating oxygen and cutting oxygen supply systems.

Oxygen cutting of metal is acomplished in several stages: metal is heated by the torch flame to the temperature of ignition in the oxygen flow (1100° to 1250°C, depending on the steel composition), an initial hole is burned in the metal by a flow of cutting oxygen away from the outline being cut with a slowly moving torch, then the cutting torch is moved along the outline of the part being produced. The device, controlling the metal cutting process, is enabled when the cutting torch is set to the outline to be produced, so that the most complicated initial part of metaly oxygen cutting is not controlled by this device. However, at the initial period the torch flame may not ignite, the power of the flame may be insufficient due to clogging of the torch nozzles or variations of the operating conditions may make it insufficient to burn the initial hole in the metal, so that there will be no metal cutting during cutting torch movement during this starting period, which will be stopped only when the cutting torch is settled to outline of the metal part to be produced. This results in an impaired efficiency of the oxygen cutting process. Due to variations of the temperature to which the site of the initial hole is heated, in multitorch cutting the initial holes are burned not all at once, so that this stage of initial hole burning has to be repeated at another site, this leading to losses of metal and reduced efficiency of metal usage.

Moreover, a high quality of the surface of a metal cut is ensured only at a constant power of the cutting torch flame, constant rate of cutting oxygen flow and constant speed of cutting torch movement. Consequently, varying the cutting torch speed in accordance to an analogue electric signal generated by the optical sensor results in a poorer quality of the metal cut surface (surface roughness, nonperpendicularity of cut).

When cutting out along an outline there is no illumination of the frontal surface of the metal cut, if the process is violated when cutting metal sheets of up to 15 mm to 20 mm thickness. With sheets of a thickness ranging from 20 mm to 2,000 mm, variations in the cutting conditions (a fall of heating oxygen or fuel gas pressure, defects in the metal) lead to a change in the angle of inclination of the cut relative to the cutting torch axis and result in incomplete cuts through the metal thickness. In this case liquid slags of the metal are thrown up out of the cut, causing the optical sensor to generate an electric signal indicating luminance of the metal cut frontal surface during poor quality cutting, and the cutting torch movement and cutting oxygen supply are not stopped.

It is an objective of this invention to provide metal oxygen cutting with improved productivity and of higher accuracy.

It is another objective of the invention is to improve the efficiency of metal usage,

It is a third objective of this invention to improve the quality of the metal cut.

This is achieved by that in the method for optoelectronic control of the metal oxygen cutting process, comprising detection of the optical emission from the frontal surface of a metal cut by an optical sensor, evaluation of the luminance of the frontal surface of a metal cut with the aid of the optical sensor, generation of control signals corresponding to the luminance of the frontal surface of a metal cut, and sending commands to control the speed of the cutting torch movement and the supply of fuel gas, heating oxygen and cutting oxygen, according to this invention the following sequence of operations is additionally executed, including detection of the cutting torch flame by an optical sensor prior to metal cutting and evaluation of the torch flame luminance with the aid of an optical sensor prior to metal cutting, detection of the light emission of the metal surface during its heating in the initial cutting site with the aid of an optical sensor and evaluation of the light emission from the metal surface during its heating at the initial cutting site with the aid of an optical sensor, generation of discrete electric signals corresponding to the luminance of the torch flame prior to metal cutting, of the metal surface during its heating at the initial cutting site and of the frontal surface of the metal cut, and at a level of electric control signals corresponding to the absence of torch flame prior to metal cutting sending a command to cease feeding the cutting torch with fuel gas and heating oxygen, at a level of electric control signals corresponding to the presence of torch flame prior to metal cutting sending a command to continue feeding the cutting torch with fuel gas and heating oxygen, at a level of electric control signals corresponding to metal surface luminance during its heating at the initial cutting site, indicating that the temperature of this surface is equal to that of metal ignition, sending a command to enable feeding the cutting torch with cutting oxygen and to enable cutting torch movement, at a level of electric control signals corresponding to a luminance of the frontal surface of the metal cut at which the angle of the metal cut line is inclined relative to the cutting torch axis exceeds 7° to 15° sending a command to cease feeding the cutting torch with cutting oxygen and stop torch movement.

It is expedient that, to improve metal oxygen cutting productivity and metal usage efficiency with metal cutting simultaneously by several cutting torches at different cutting sites, similar electric control signals be successively compared, including electric control signals corresponding to torch flame luminance prior to cutting at each cutting site, corresponding to metal surface luminance during its heating at the initial cutting site for each cutting site, and corresponding to the luminance of the frontal surface of the metal cut in each cutting site, and that the command to cease feeding the cutting torch with fuel gas and heating oxygen be sent at present electric control signals corresponding to the absence of torch flame prior to metal cutting at least at one cutting site, that the command to feed cutting oxygen to the cutting torch and move the cutting torch be sent at present electric control signals corresponding to metal surface luminance during its heating at the initial cutting site indicating the temperature of this surface at all cutting sites to be equal to the metal ignition temperature, that the command to cease feeding the cutting torch with cutting oxygen and to cease moving the cutting torch be sent at present electric control signals corresponding to a luminance of the frontal surface of the metal cut indicating the angle of inclination of the metal cut relative to the cutting torch axis to exceed 7° to 15° at least one cutting site.

This invention also resides in that the device implementing the method for optoelectronic control of the metal oxygen cutting process, comprising at least one cutting torch, with the body thereof provided with peripheral channels for feeding fuel gas and heating oxygen and an axial channel for feeding cutting oxygen, and mounting an optical sensor generating electric signals corresponding to the luminance of the frontal surface of the metal cut, cutting torch drives fitted to each cutting torch, fuel gas, heating oxygen and cutting oxygen supply systems connected to channels for feeding fuel gas and heating oxygen and to the channel for feeding cutting oxygen of each cutting torch, wherein the outputs of the optical sensor generating electric signals corresponding to the illumination of the frontal surface of the metal cut of each cutting torch is connected via a first network of connected in series electric signal amplifier and control signal generator to the input of a control system, the outputs whereof are connected to the cutting torch drives and to the fuel gas, heating oxygen and cutting oxygen supply systems, according to the invention further comprises an optical sensor generating electric signals corresponding to the torch flame luminance prior to cutting and an optical sensor generating electric signals corresponding to the luminance of the metal surface during its heating at the initial cutting site, mounted, along with the optical sensor generating electric signals corresponding to the luminance of the frontal surface of the metal cut, in the channel for feeding the cutting oxygen of each cutting torch, wherein the optical sensor generating electric signals corresponding to the luminance of the frontal surface of the metal cut, the optical sensor generating electric signals corresponding to the torch flame luminance prior to cutting, and the optical sensor generating electric signals corresponding to the luminance of the metal surface during its heating at the initial cutting site of each cutting torch feature a spectral characteristics, the maxima whereof correspond to the luminance of the frontal surface of the metal cut, of the torch flame prior to cutting, and of the metal surface during its heating at the initial cutting site, respectively, with the optical sensor generating electric signals corresponding to torch flame luminance prior to cutting and the optical sensor generating electric signals corresponding to the luminance of the metal surface during its heating at the initial cutting site of each cutting torch connected, respectively, via a second and third network of connected in series electric signal amplifier and electric control signal generator to the inputs of the control system.

It is advantageous that, to improve the performance reliability, in each cutting torch the optical sensor generating electric signals indicative of the luminance of the metal cut frontal surface be positioned axially relative to the cutting oxygen feed channel, and that the optical sensor generating electric signals indicative of the torch flame luminance prior to cutting and the optical sensor generating electric signal indicative of the metal surface luminance during its heating at the initial cutting site be positioned along the periphery of the cutting oxygen feed channel.

It is opportune, that the control system comprise a control signal input/output unit with the "n" inputs thereof connected to the outputs of the first, second and third control signal generators electrically connected to the optical sensors generating electric signals in response to the luminance of the metal cut frontal surface, of the torch flame prior to cutting, and of the metal surface during its heating at the initial cutting site of each cutting torch, a processor with the input thereof connected to the output of the control signal input/output unit and with the first output thereof connected to the "n+1" input of the control signal input/output unit, a first controller with the input thereof connected to the second output of the processor and with the outputs thereof connected to the inputs cutting torch drives, a second controller with the input thereof connected to the third output of the processor, with the first output thereof connected to the input of the fuel gas a heating oxygen supply system, and with the second output thereof connected to the input of the cutting oxygen supply system.

This method of optoelectronic control of the oxygen cutting process and device thereof allow a higher productivity and accuracy of metal oxygen cutting, along with better metal usage efficiency and high quality of metal cut by implementing successive monitoring of the presence of a torch flame prior to metal cutting, of the metal surface luminance during its heating at the initial cutting site, and of the luminance of the metal cut frontal surface.

Brief Description of Accompanying Drawings

The invention will now be described in greater detail with reference to specific embodiments thereof and to the accompanying drawings, wherein:

Fig.1 shows the bloock diagram of the device implementing the method for optoelectronic control of the metal oxygen cutting process of this invention;

Fig.2a shows the cutting torch during flame ignition prior to metal cutting, according to the invention (longitudinal section);

Fig.2b shows the cutting torch and metal sheet during metal surface heating (longitudinal section), according to the invention;

Fig.2c shows the cutting torch and metal sheet during metal cutting (longitudinal section), according to the invention;.

Fig.3 shows a plot of the output voltage of the optical sensor generating electric signals indicative of the luminance of the metal cut frontal surface as a function of the inclination angle of the metal cut line relative to the torch axis:

Fig.4 shows metal sheets with various metal cut frontal surfaces, (longitudinal sections), according to the invention.

Preferred Embodiments of the Invention

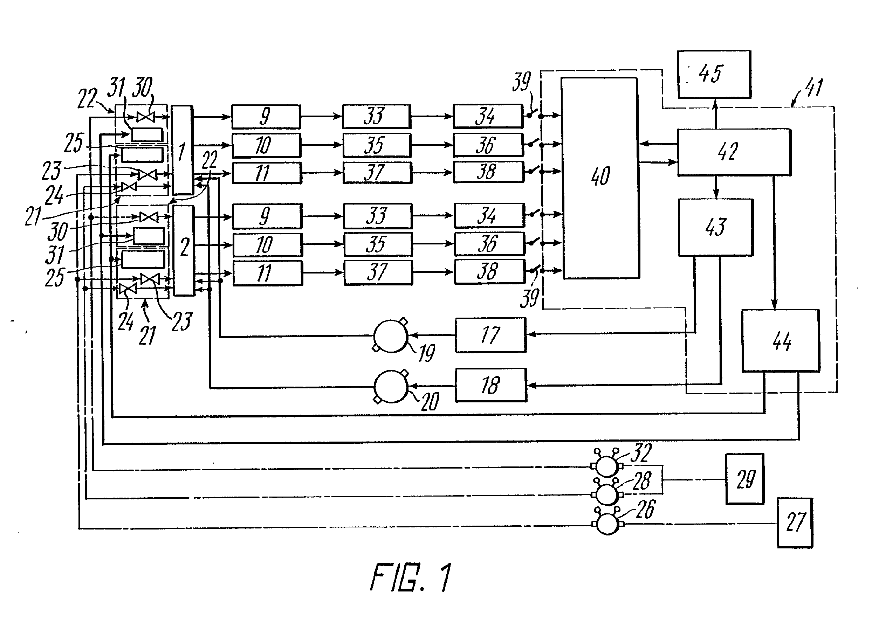

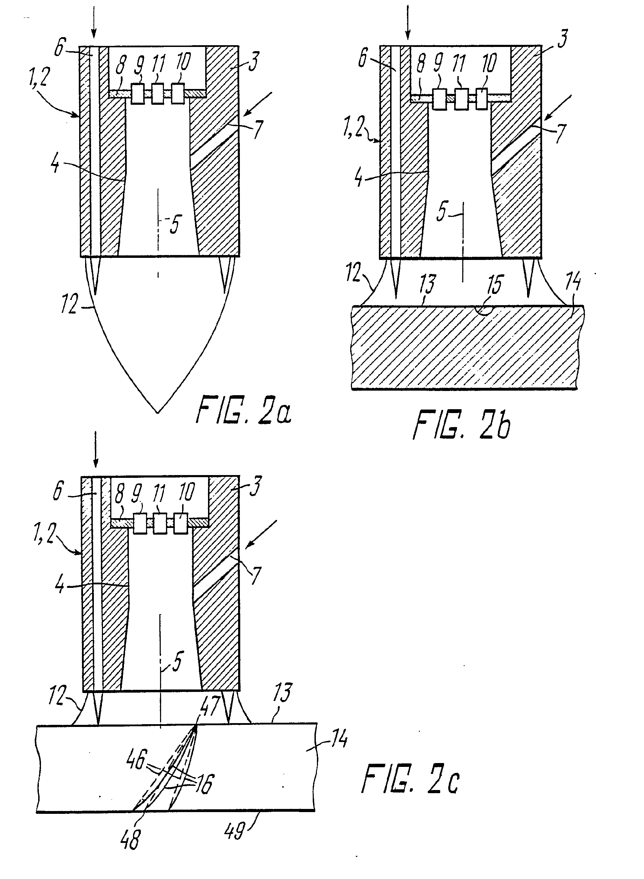

The method for optoelectronic control of the metal oxygen cutting process is embodied in a device comprising cutting torches 1, 2 (Fig.1), with body 3 of each thereof provided with a central channel 4 (Figs 2a,b,c) to feed the cutting oxygen. Along the periphery and parallel to body 3 axis 5 channels 6 are provided to feed the fuel gas and heating oxygen. Acetylene, propane-butane and natural gas may be used as the fuel gas.

Channel 7 passing cutting oxygen into central channel 4 of each cutting torch 1, 2 is at an angle to body 3 axis 5. Yoke 8 is fitted to bosses in central channel 4 normal to body 3 axis 5 and rigidly mounts first optical sensor 9 generating electric signals indicative of the torch flame prior to cutting, second optical sensor 10 generating electric signals indicative of metal surface luminance during its heating at the initial cutting site, and third optical sensor 11 generating electric signals indicative of the luminance of the metal cut frontal surface, these sensors embodied with photoelectric cells or phototransistors. Third optical sensor 11 is positioned axially relative to central channel 4 of each cutting torch 1, 2, with first optical sensor 9 and second optical sensor 10 positioned at the periphery of central channel 4 of each cutting torch 1, 2.

The spectral characteristic of first optical sensor 9 has a maximum in the optical wavelength range from $1.5 \mu m$ to $1.8 \mu m$, corresponding to torch flame 12 luminance prior to cutting. The maximum of the spectral characteristic of second optical sensor 10 is in the optical wavelength range from $1.1 \mu m$ to $1.5 \mu m$, this corresponding to the luminance of metal sheet 14 surface at site 15 of its initial cutting. The maximum of the spectral characteristic of third optical sensor 11 is in the optical wavelength range from $0.4 \mu m$ to $1.1 \mu m$, corresponding to the luminance of metal cut frontal surface 16 (Fig.2c).

The device comprises a first servodrive 17 and second servodrive 18 (Fig.1) with electric motors 19,20 linked to cutting torches 1, 2 and providing displacement of each torch 1, 2 along two orthogonal axis.

The device further comprises fuel gas and heating oxygen supply system 21 and cutting oxygen supply system 22. Each fuel gas and heating oxygen supply system 21 comprises solenoid valve 23 to control the flow of fuel gas and solenoid valve 24 to control the flow of heating oxygen, both valves connected to power supply 25 and channels 6 (Fig.2) of cutting torches 1, 2. Solenoid valve 23 (Fig. 1) is connected via pressure regulator 26 to fuel gas supply 27, solenoid valve 24 in system 21 is connected via pressure regulator 28 to oxygen supply 29. Each cutting oxygen supply system 22 comprises solenoid valve 30 to control the flow of cutting oxygen connected to power supply 31 and to channel 4 (Fig.2) of cutting torches 1,2, and connected via pressure regulator 29 to oxygen supply 29.

The output of first optical sensor 9 generating electric signals indicative of the torch flame luminance prior to metal cutting of each cutting torch 1, 2 is connected to the input of first electric signal amplifier 33,

- 11 -

the output whereof drives the input of first electric control signal generator 34. The output of second optical sensor 10 generating electric signals indicative of the metal surface luminance at its heating at the initial cutting site of each cutting torch 1, 2 is connected to the input of second electric signal amplifier 33, the output whereof drives the input of second electric control signal generator 36. The output of third optical sensor 11 generating electric signals indicative of the luminance of metal cut frontal surface of each cutting torch 1, 2 is connected to the input of third electric signal amplifier 37, the output whereof drives the input of third electric control signal generator 38.

The first, second and third control signal generators 34, 36, 38 are designed along widely known lines (T.M. Agakhanyan "Integral'nie mikroskhemi" ("Integrated micro-cuits"), Moscow, Energoatomizdat Publishers, 1983, p.437. In Russian).

The outputs of first, second and third electric control signal generators 34, 36, 38, driven by the first, second and third optical sensors 9, 10, 11 in each cutting torch 1, 2 are connected via electronic keys 39 to the first, second, third, fourth, fifth, and sixth data inputs of input/output unit 40 of control system 41. The number of data inputs of input/output unit 40 is equal to the total number of optical sensors 9, 10, 11 in all cutting torches 1, 2. The output of input/output unit 40 is connected to the input of processor 42, the first output whereof is connected to the seventh (n+1), input of input/output unit 40.

Electric signal input/output unit 40 of control system 41 is connected to a photoelectric reader (no shown in the drawings) which outputs data on the geometry of parts being cut out and oxygen cutting conditions in binary coded decimal format, passed to processor 42 input.

Control system 41 further comprises first controller 43 with the input thereof connected to the second output of processor 42, and second controller 44 with the input thereof connected to the third output of processor 42, the fourth output whereof is connected to display 45. The first and second outputs of first controller 43 are connected to the inputs of servodrives 17, 18. The first output of second controller 44 is connected to power supply 25 of fuel gas and heating oxygen supply system 21, the second output of second controller 44 is connected to power supply 31 of cutting oxygen supply system 22.

The processor 42, first controller 43 and second controller 44 are designed along well known lines (SOJUZZAGRANPRIBOR booklet, USSR Avtomatizatsiya 83, Avtomatizirovannie sistemi upravleniya v mashinostroenii (Automated control systems in mechanical enginering).- In Russian).

First optical sensor 9 generating electric signals indicative of torch flame luminance prior to cutting is electrically connected via a network of connected in series first electric signal amplifier 33 and first electric control signal generator 34, and control system 41 to fuel gas and heating oxygen supply system 21. Second optical sensor 10 generating electric signals indicative of the metal surface luminosity during its heating at the initial cutting site is connected electrically via a network of connected in series second electric signal amplifier 35 and second electric control signal generator 36, and control system 41 to cutting oxygen supply system 22 and to first and second servodrives 17, 18 displacing cutting torches 1, 2. Third optical sensor 11 generating electric signals indicative of the luminance of the metal cut frontal surface is electrically connected via a network of connected in series third electric signal amplifier 37 and third electric control signal generator 38, and control system 41 to cutting oxygen supply system 22 and to first and second servodrives 17, 18 providing cutting torches 1, 2 displacement.

Electric communication between the first, second and third optical sensors 9, 10, 11 and the fuel gas and heat-

- 13 -

ing oxygen supply system 21, cutting oxygen supply system 22, and servodrives 17, 18 displacing cutting torches 1,2 are provided by processor 42 in control system 41.

The method for optoelectronic control of the oxygen cutting process is illustrated by the description of the functioning of the device thereof.

The method for optoelectronic control of the oxygen cutting process resides in that, when flame 12 (Fig.2a) of cutting torches 1, 2 is ignited, its light emission is detected by optical sensors 9 (Fig.1) prior to beginning the cutting process, this producing an electric signal at the output optical sensor 9 indicative of torch flame 12 luminosity, passed by first electric signal amplifier 33 (Fig.1) to the input of first electric control signal generator 34. In response to the presence of torch flame 12 (Fig.2a) of cutting torches 1, 2 control signal generator 34 outputs a digital logic "1" signal, the absence of torch flame 12 causes generator 34 to output a digital logic "0". The output signal of control signal generator 34 (Fig.1) is passed by electric signals input/output unit 40 of control system 41 to the input of processor 42, which polls the data inputs of unit 40 and analyses their states. The output signal of processor 42 is applied to the inputs of first controller 43 and of second controller 44. In case of absence of torch flame 12 (Fig.2a) of cutting torches 1, 2 input/output unit 40 receives a logic "0" signal, this causing second controller 44 to command closure of solenoid valves 23,24 in fuel gas and heating oxygen supply system 21 of each cutting torch 1,2.

A logic "1" level of the control signal, indicating the presence of torch flame 12 (Fig.2a) of cutting torches 1,2 prior to metal cutting allows further feed of fuel gas and heating oxygen to cutting torches 1, 2.

When the metal is cut simultaneously by several cutting torches 1, 2 at different cutting sites, processor 42 (Fig.1) consecutively compares similar control signals indicative of flame 12 luminance from cutting torches 1, 2

- 14 -

prior to metal cutting and at a control signal indicating the absence of flame 12 of even one cutting torch 1, 2 second controller 44 (Fig.1) sends a command to solenoid valves 23,24 to cut off supply of fuel gas and heating oxygen to all cutting torches 1, 2. At the same time display 45 displays a light and/or emits a sound signal notifying the cutting torches 1, 2 to be at fault.

At a logic "1" level of control signals from all cutting torches 1, 2, indicating the presence of flame 12, processor 42 (Fig.1) commands electronic key 39 to disable the data channel of electric communications between optical sensor 9 of each cutting torch 1, 2 and fuel gas and heating oxygen supply system 21.

Thereafter flame 12 of cutting torches 1, 2 heats the metal at initial cutting site 15 to the temperature of metal ignition and optical sensor 10 of each cutting torch 1, 2 detects the light emission of surface 13 of metal sheet 14 at initial cutting site 15 and evaluates the luminance of metal surface 13.

Second electric control signal generator 36 (Fig.1) outputs a digital control signal indicative of the luminance of surface (Fig.2b) at initial cutting site 15, passed to the input of control system 41 (Fig.1).

At a logic "1" level of control signals, indicating that metal surface 13 (Fig.2b) at initial cutting site 15 of metal sheet 14 is heated to the temperature of metal ignition, first and second controllers 43,44 (Fig.1) command solenoid valve 30 in cutting oxygen supply system 22 to feed cutting oxygen to torches 1, 2 and servodrives 17, 18 to control the movement of cutting torches 1, 2.

At a logic "0" level of control signals, indicating that metal surface 13 (Fig.2b) at initial cutting site 15 of metal sheet 14 is below the temperature of metal ignition, feeding cutting torches 1, 2 with fuel gas and heating oxygen is continued.

When the metal is being cut simultaneously by several cutting torches 1, 2 in different cutting sites, processor

42 (Fig.1) of control system 41 successively compares electric control signals indicative of the luminance of surface 13 (Fig.2b) of metal sheet 14 at initial cutting site 15 from each cutting torch 1, 2 at each cutting site. At electric control signals indicating that metal surface 13 at initial cutting site 15 of metal sheet 14 is heated to the temperature of metal ignition at all cutting sites, first and second controllers 43,44 (Fig.1) command cutting oxygen to be fed to all cutting torches 1,2 and enable displacement of all cutting torches 1,2 by servodrives 17, 18.

Thereafter processor 42, by disabling electronic key 39, cuts off the data channel between second optical sensor 10 in each cutting torch 1,2 and cutting oxygen supply systems 22 and servodrives 17,18.

Thereafter the metal is cut along the outline of the parts being manufactured. After metal sheet 14 (Fig.2c) is cut through on a length of 1.5 to 2 metal sheet thicknesses from initial cutting site 15, processor 42 (Fig.1) establishes a data channel via electronic key 39 to provide electric communications between third optical sensor 11, generating signals indicative of the luminance of the metal cut frontal surface, and cutting oxygen supply system 22 and servodrives 17,18 displacing the cutting torches. Optical sensor 11 detects light emission from frontal surface 16 (Fig.2c) of metal sheet 14 cut and evaluates the luminance of frontal surface 16, which is a function of the inclination angle between metal sheet 14 cut line 46 and axis 5 of body 3 of each cutting torch 1, 2.

Metal cut line 46 is defined as the line connecting point 47 of cutting oxygen entry into surface 13 of metal sheet 14 with point 48, wherein the flow of cutting oxygen exits out of the opposite surface 49 of metal sheet 14.

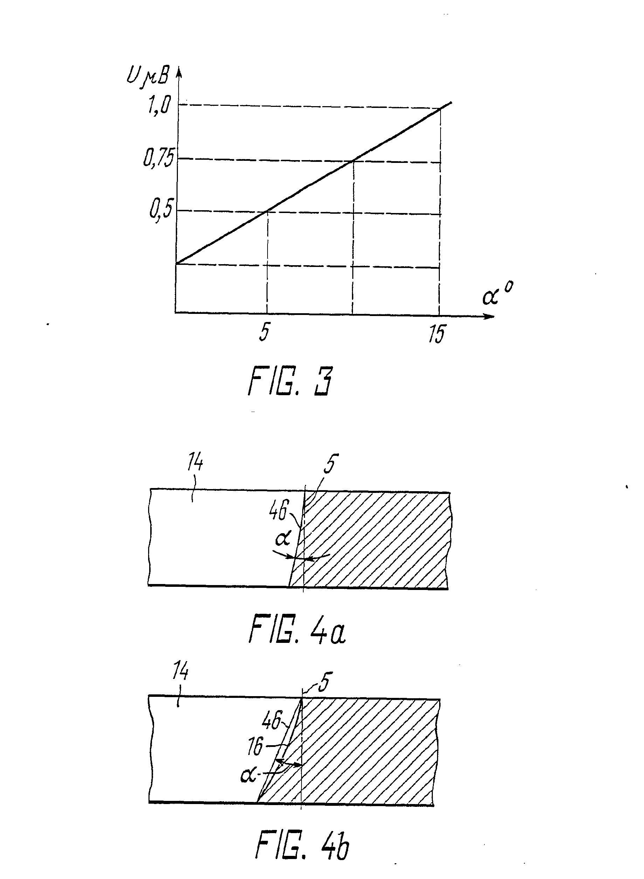

In known in the art cutting conditions the value of luminance of frontal surface 16 of metal sheet 14 cut is directly proportional to the inclination angle of metal sheet 14 cut line 46 relative to axis 5 of body 3 of each cutting torch 1, 2, as illustrated by the plot of output voltage U (Fig.3) of optical sensor 11 (Fig.2c), generating electric signals indicative of the luminance of metal cut frontal surface, as a function of angle (Fig.3) of inclination of cut line 46 (Fig.2c) relative to axis 5 of body 3 of each cutting torch 1, 2. Fig.4a,b shows a section of metal sheet 14 at $\alpha = 5°$ (Fig.4a) and $\alpha = 15°$ (Fig.4b).

High-quality cuts are produced at cut line 46 (Fig.2c) inclined to axis 5 of body 3 of cutting torch 1,2 at angles from 7° to 15°.

At cut line 46 inclined to axis 5 of body 3 of cutting torch 1, 2 at angles exceeding the limiting value of 15°, this being caused by violation of proper conditions of oxygen cutting due to variations of fuel gas pressure, oxygen pressure, defects in the metal, scale on the metal's surface, the accuracy of metal cutting is impaired and the metal sheet may not be entirely cut through.

At angle $\alpha$ less than the lower limiting value of 7° the speed of metal cutting has to be reduced, this leading to a lower productivity of the oxygen cutting process.

The electric signal indicating the luminance of the metal cut frontal surface 16 arrives from the output of third optical sensor 11 via third electric signal amplifier 36 (Fig.1) at the input of third electric control signal generator 38. Generator 38 outputs a logic "1" digital signal in response to a luminance of the metal cut frontal surface 16 (Fig.2c) corresponding to an inclination angle less than 7° to 15° between cut line 46 and cutting torch 1, 2 body 3 axis 5, or a logic "0" digital signal in response to frontal surface 16 luminance, corresponding to angles larger than 7° to 15°. The output signal of third generator 38 (Fig.1) arrives via input/output unit 40 to the input of processor 42, the output signal whereof is passed to the inputs of first controller 43 and second controller 44.

At a logic "0" level of control signals, indicating a luminance of metal cut frontal surface 16 (Fig.2c) corresponding to an inclination angle $\alpha$ between metal cut line 46 and axis 5 of cutting torch 1,2 body 3 in excess of 7° to 15°, processor 42 (Fig.1) sends a command to the inputs of first controller 43 and second controller 44 to close solenoid valves 30 in cutting oxygen supply system 22 of each cutting torch 1, 2 and to disable servodrives 17, 18. Simultaneously, display 45 emits a light and/or sound signal indicating a fault of cutting torches 1,2.

When cutting is being performed by several cutting torches 1, 2 in different cutting sites, processor 42 successively compares similar electric signals indicative of the luminance of metal cut frontal surface 16 (Fig.2c) at different cutting sites and, at a signal from at least one cutting site indicating the luminance of a metal cut frontal surface 16 corresponding to an angle between the metal cut line 46 and cutting torch 1, 2 body 3 axis 5 exceeding 7° to 15°, sends a command to cease feeding cutting oxygen to all cutting torches 1, 2 and to disable all servodrives 17,18 of cutting torches 1,2.

On completion of cutting out the desired out line, processor 42 (Fig.1) commands electronic key 39 to disable the data channel providing electric communications between third optical sensor 11 of each cutting torch 1,2 and cutting oxygen supply system 22 and servodrives 17,18 of all cutting torches 1,2.

Use of this invention allows the yield of fit rolled stock to be increased by up to 5%, reduction of labour requirements for metal structures manufacture and labour expenditure.

CLAIMS :

1. A method for optoelectronic control of oxygen cutting, comprising detection of optical emission from frontal surface (16) of a metal cut by optical sensor (11), evaluation of the luminance of metal cut frontal surface (16) by optical sensor (11), generating of electric control signals indicative of the luminance of metal cut frontal surface (16), sending commands to control the speed of cutting torch (1) displacement and to control the rate of fuel gas, heating oxygen and cutting oxygen supply to cutting torch (1), c h a r a c t e r i z e d  by that additionally in succession executed are the operations of detecting the optical emission from flame (12) of cutting torch (1) prior to metal cutting by optical sensor (9), evaluation of flame (12) of cutting torch (1) luminance by optical sensor (9), detection of optical emission of metal surface (13) during its heating at the initial metal cutting site (15) by optical sensor (10), evaluation of the luminance of metal surface (13) during its heating at the initial cutting site (15) by optical sensor (10), generation of digital electric control signals indicative of cutting torch (1) flame (12) luminance prior to cutting, of the luminance of metal surface (13) during its heating at the initial cutting site (15) and of the luminance of the metal cut frontal surface (16), and at control signal levels indicating the absence of cutting torch (1) flame (12) prior to cutting issuing a command to cut off fuel gas and heating oxygen supply to cutting torch (1), at control signal levels indicating the presense of torch (1) flame (12) prior to metal cutting issue a command to continue feeding of fueld gas and heating oxygen to cutting torch (1), at control signal levels indicating the luminance of metal surface (13) during its heating at initial cutting site (15) to confirm its heating to the metal ignition temperature issuing a command to supply cutting oxygen to cutting torch (1) and to displace cutting torch (1), at a control signal level indicative of the luminance of metal cut frontal surface (16) corresponding to cut line 46 to be inclined relative to torch (1) axis (5) at an angle exceeding 7° to 15° issuing a command to cut off cutting oxygen supply to cutting torch (1) and to disable cutting torch (1) displacement.

2. A method as claimed in Claim 1, c h a r a c t e - r i z e d by that when metal is cut by several cutting torches (1,2) simultaneously in different cutting sites, successively compared are similar electric control signals, indicative of torch (1) flame (12) luminance prior to cutting at each cutting site, of metal surface (13) luminance during its heating at initial cutting site (15) at each cutting site, and of metal cut frontal surface (16) luminance at each cutting site, and the command to cut off fuel gas and heating oxygen supply to cutting torches (1,2) is issued if the control signal from even one cutting site indicates the absence of torch (1,2) flame (12), the command to feed cutting oxygen and displace cutting torches (1,2) is issued at control signals indicative of metal surface (13) luminance during its heating at initial cutting site (15) confirming metal heating to ignition temperature arriving from all cutting sites, and the command to cut off cutting oxygen supply to and disable displacement of cutting torches (1,2) is issued at the control signal from even one cutting site indicative of metal cut frontal surface (16) luminance evidences metal cut line (46) to be inclined relative to torch (1,2) axis (5) at an angle esceeding 7° to 15°.

3. A device embodying the method for optoelectronic control of oxygen cutting as claimed in Claims 1, 2, comprising at least one cutting torch (1,2), body (3) whereof is provided with peripheral channels (6) to feed fuel gas and heating oxygen and channel (4) along axis (5) to feed cutting oxygen and housing optical sensor (11) generating electric signals indicative of the luminance of metal cut frontal surface (16), servodrives (17,18) connected to each cutting torch (1,2) for displacement thereof, fuel gas and heating oxygen supply system (21) connected to channels (6) and cutting oxygen supply system (22) connected to channel (4) in each cutting torch (1,2), wherein the output of optical sensor (11) generating electric signals indicative of the luminance of metal cut frontal surface (16) electrically connected via a first network of connected in series electric signal amplifier (37) and electric control signal generator (38) to the input of control system (41), the outputs whereof are connected to servodrives (17,18) for displacing cutting torches and to systems (21,22) supplying fuel gas and heating oxygen, and cutting oxygen, respectively, c h a r a c t e r i z e d by that it is further complemented with optical sensor (9) generating electric signals indicative torch flame luminosity prior to cutting and optical sensor (10) generating electric signals indicative of the luminance of the metal surface during its heating at the initial metal cutting site, mounted, along with optical sensor (11) generating electric signals indicative of the metal cut frontal surface luminosity, in channel (4) feeding cutting oxygen in each cutting torch (1,2), wherein optical sensor (11) generating electric signals indicative of metal cut frontal surface luminance, optical sensor (9) generating electric signals indicative of torch flame luminance prior to cutting, and optical sensor (10) generating electric signals indicative of metal surface luminosity during its heating at the initial cutting site, in each cutting torch (1,2), feature spectral characteristics, the maxima whereof correspond, respectively, to the maximal luminosity of the frontal surface (16) of the metal cut, to the maximal luminosity of torch (1,2) flame (12) prior to cutting, and to the maximal luminosity of metal surface (13) during its heating at initial cutting site (15), with optical sensor (9) generating electric signals indicative of torch flame luminosity prior to cutting and optical sensor (10) generating electric signals indicative of metal surface luminosity during its heating at the initial cutting site, of each cutting torch (1,2) are connected via second and third networks of connected in series electric signal amplifier (33,35) and electric control signal generator (34,36) to the inputs of control system (41).

4. A device as claimed in Claim 3, c h a r a c t e - r i z e d by that in each cutting torch (1,2) optical sensor (11) generating electric signals indicative of the metal cut frontal surface luminance is mounted coaxially in channel (4) feeding cutting oxygen in cutting torch (1,2), with sensor (9) generating electric signals indicative of torch flame luminosity prior cutting and optical sensor (10) generating eletcric signals indicative of metal surface luminosity during its heating at the initial cutting site are mounted at the periphery of channel (4) for feeding cutting oxygen in cutting torch (1,2).

5. A device as claimed in Claims 3,4, c h a r a c - t e r i z e d by that control system (41) comprises control signal input/output unit (40), the "n" inputs whereof are connected to the outputs of first, second and third electric control signal generators (34,36,38), electrically connected, respectively, to optical sensor (11) generating electric signals indicative of the luminance of the metal cut frontal surface, to optical sensor (9) generating electric signals indicative of the torch flame luminosity prior to cutting, and to optical sensor (10) generating electric signals indicative of the metal surface luminosity during its heating at the initial cutting site, of each cutting torch (1,2), processor (42) with the input thereof connected to the output of control signal input/output unit (40), with the first output thereof connected to the "n+1"st input of control signal input/output unit (40), a first controller (43) with the input thereof connected to the second output of processor (42) and with the outputs thereof connected to the inputs of servodrives (17,18) displacing the cutting torches, a second controller (44) with the input thereof connected to the third

- 22 -

output of processor (42), with the first output thereof connected to fuel gas and heating oxygen supply system (21), and with the second output thereof connected to cutting oxygen supply system (22).

FIG. 1

EP 0 408 755 A1

FIG. 2a

FIG. 2b

FIG. 2c

FIG. 3

FIG. 4a

FIG. 4b

# INTERNATIONAL SEARCH REPORT

International Application No PCT/SU 89/00235

## I. CLASSIFICATION OF SUBJECT MATTER (if several classification symbols apply, indicate all)

According to International Patent Classification (IPC) or to both National Classification and IPC

IPC⁵ B 23 K 7/00

## II. FIELDS SEARCHED

| Minimum Documentation Searched |
| --- |

| Classification System : | Classification Symbols |
| --- | --- |
| IPC⁴ | B 23 K 7/00, 7/02, 7/10 |

| Documentation Searched other than Minimum Documentation to the Extent that such Documents are Included in the Fields Searched |
| --- |

## III. DOCUMENTS CONSIDERED TO BE RELEVANT

| Category ° | Citation of Document, ¹¹ with indication, where appropriate, of the relevant passages ¹² | Relevant to Claim No ¹³ |
| --- | --- | --- |
| A | US, A, 3596892 (MINORU NAKANISHI et al.) 3 August 1971 (03.08.71), see the abstract (cited in the description) | 3-5 |
| A | JP, B2, 55-6034 13 February 1980 (13.02.80), see figures 1,2 (cited in the description) | 1,2 |
| A | DD, B, 215027 (VEB BRAUNKOHLENWERK GLUECKAUF), 31 October 1984 (31.10.84) figure 1 | 3 |

° Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
| --- | --- |
| 12 December 1989 (12.12.89) | 9 February 1990 (09.02.90) |

| International Searching Authority | Signature of Authorized Officer |
| --- | --- |
| ISA/SU | |

Form PCT/ISA/210 (second sheet) (January 1985)